# EUROPEAN PATENT SPECIFICATION

(11) **EP 2 598 273 B1**
(45) Date of publication and mention of the grant of the patent: **23.04.2014**
(21) Application number: 11736315.0
(22) Date of filing: 08.07.2011
(51) Int. Cl.: B23C 3/35

(54) **Method and machine for producing key blanks for cylinder locks**
Verfahren und Vorrichtung zur Herstellung von Schlüsselrohlingen für Zylinderschlösser
Procédé et dispositif de fabrication d'ébauches de clé pour serrures à cylindre

(30) Priority: 29.07.2010 IT VE20100047
(43) Date of publication of application: 05.06.2013
(73) Proprietor: SILCA S.p.A., 31029 Vittorio Veneto (IT)
(72) Inventor: TOCCHET, Gianni, I-31012 Cappella Maggiore (IT)
(74) Representative: Piovesana, Paolo
(86) International application number: PCT/EP2011/061576
(87) International publication number: WO 2012/013475

(56) References cited:
- EP-A- 1 468 769
- WO-A2-01/38041
- DE-A1- 10 031 713
- US-A- 6 065 911

## Description

The present invention relates to a method and machine for producing key blanks for cylinder locks.

Locks are known comprising an operating cylinder for a bolt, and a key insertable into the cylinder and able to rotate it in order to operate the bolt.

The key can be inserted into the lock cylinder only if its profile corresponds to the cross-section through the slot provided in the cylinder, and is able to rotate the cylinder only if the key bitting pattern corresponds to the cylinder code.

The lock security is related to the large number of profiles which exist for keys, and the large number of possible codes, and hence the very low probability of being able to operate a lock with a key intended to operate a different lock.

There currently exist tens of thousands of profiles for key blanks, which then have to be encoded to be able to operate a given lock. It follows that any key duplication centre specialized in duplicating a key blank, i.e. in transforming a key blank into a bitted key suitable for operating a given lock, must have available a vast assortment of key blanks with the most varied profiles, in order to be able to satisfy the different user requirements.

These requirements mostly relate to a limited number of profiles associated with the most widely used keys, but can sometimes relate to keys with a little-used special profile. In this case it is not only rare that the duplication centre itself has the required key blank for that particular duplication work, but it is also rare that the key blank producer keeps such a rarely required special profile in stock.

When such a case occurs, i.e. when the duplication centre has to duplicate a particular key for which the key blank is not available, the duplication centre applies to the manufacturer who, before producing that profile, waits to receive further orders to overall justify the equipment tooling cost. This can result in a lengthy waiting period, often incompatible with the requirements of the user who, when requiring a key to be duplicated, very often needs it to satisfy an immediate contingent necessity.

Document DE 100 31 713 A1 discloses a method and apparatus for the production of key blanks in which grooves are made with a finger bit on a piece of sheet metal.

An object of the invention is to solve the problem of producing key blanks with particularly unusual profiles, without having to sustain the costs currently incurred for equipping a production line, but by using simple equipment which could theoretically even be installed at duplication centres.

This and other objects which will be apparent from the ensuing description are attained, according to the invention, by a method for producing key blanks for cylinder locks as described in claim 1, and by a machine for implementing the method as described in claims.

The present invention is further clarified hereinafter with reference to the accompanying drawings, in which:
Figure 1 is a perspective view of a sheet metal piece being worked with a slot miller, which produces the slots forming the profile of the key blank,
Figure 2 is a perspective view of the same sheet metal piece during subsequent laser cutting of the key blank shape,

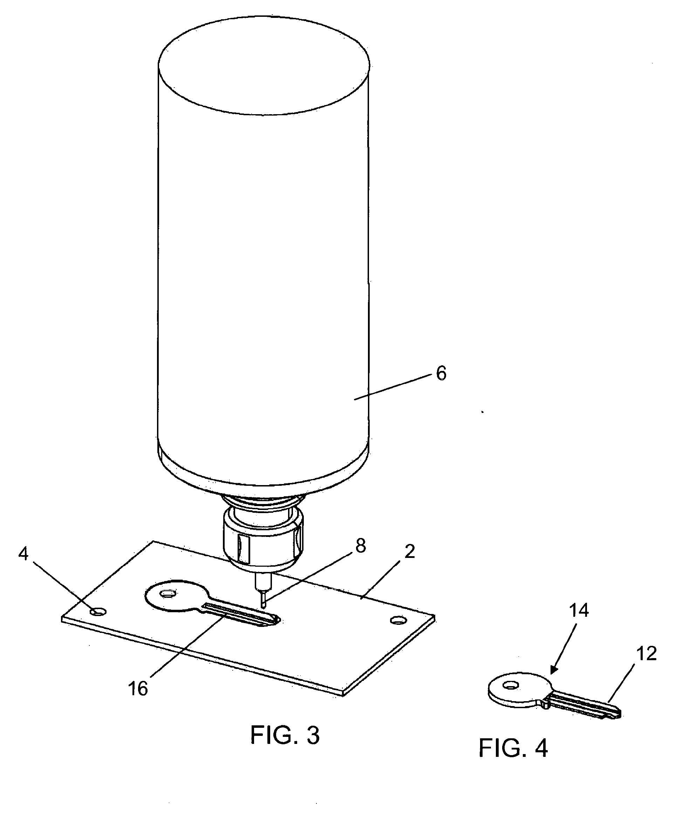

Figure 3 is a perspective view of the same sheet metal piece in the final milling machine intervention stage for finally separating the key blank from the remaining sheet metal piece,
Figure 4 shows a key blank shaped from the sheet metal piece, and
Figure 5 is a schematic plan view showing a machine for implementing the method of the invention.

As can be seen from the figures, the method of the invention starts from a sheet metal piece 2 of substantially constant thickness, as generally required for producing a key blank, and provided with locators 4 for its precise positioning on the work table of a combined machine. This comprises an operating head 6 for a slot miller 8 and a laser cutting head 10, these being positionable in turn above the sheet metal piece 2 fixed onto the machine work table. The locators 4 can consist of the edges of the sheet metal piece 2 if of regular shape, or holes, through which the piece can be fixed to the work table.

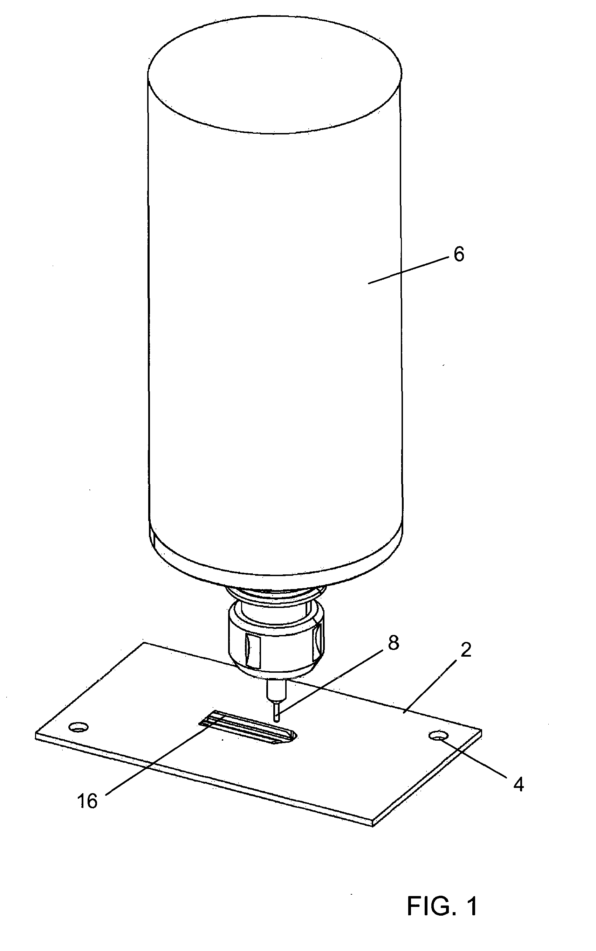

After the sheet metal piece 2 has been correctly secured to the work table, it is subjected to milling by the slot miller 8, which forms, in that portion of the sheet metal piece to form the shank 12 of the key blank 14, a series of parallel grooves 16 which overall define the profile of the key blank 14 (Figure 1). These grooves 16 can be provided on one or both of the surfaces of the sheet metal piece 2, according to the key profile to be obtained.

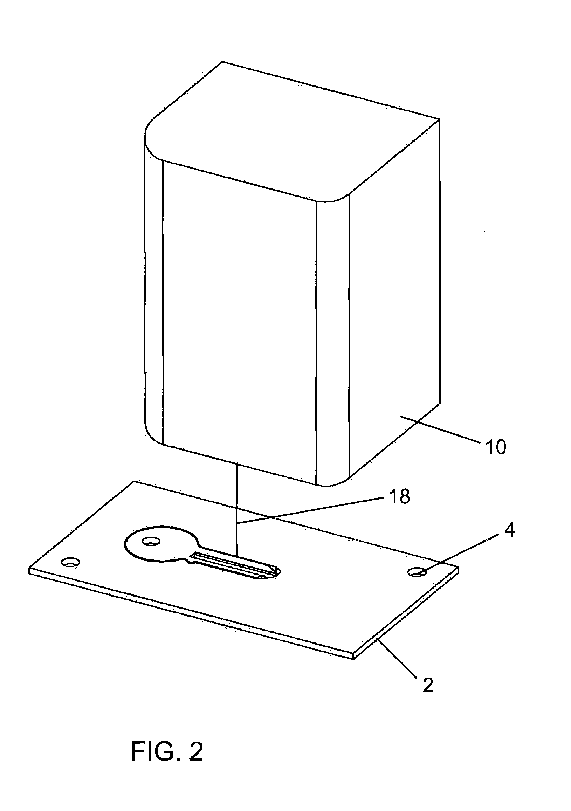

Following this operation the milling head 6 is withdrawn and replaced by the laser head 10, which is made to cut the key shape from the sheet metal piece (Figure 2).

The laser cut is not continuous, but presents at least one interruption at the key tip, where the thickness variation due to the presence of the grooves would not allow correct action of the laser beam 18.

After the laser head 10 has operated, it is withdrawn and in its place a brushing head 20 is positioned to remove from the sheet metal piece 2 those burrs inevitably caused by the laser cut.

The brushing head 20 is then withdrawn and the milling head 6 is repositioned in its place to cut through the short piece or pieces which join the key blank 14 to the remaining part of the sheet metal piece 2.

The key blank 14 obtained in this manner is then subjected to usual deburring operations to complete the cycle, which is preferably controlled automatically by a control unit on the basis of different operating programmes for each type of key blank.

From the aforegoing it is apparent that the method of the invention is particularly advantageous in that:
- it does not require the equipping of special machines, but uses very simple traditional machine tools, which can be programme-controlled and can economically produce even a single key profile,
- it is consequently immediately able to satisfy any requirement of a duplication centre, or even of the user if the equipment is installed thereat.

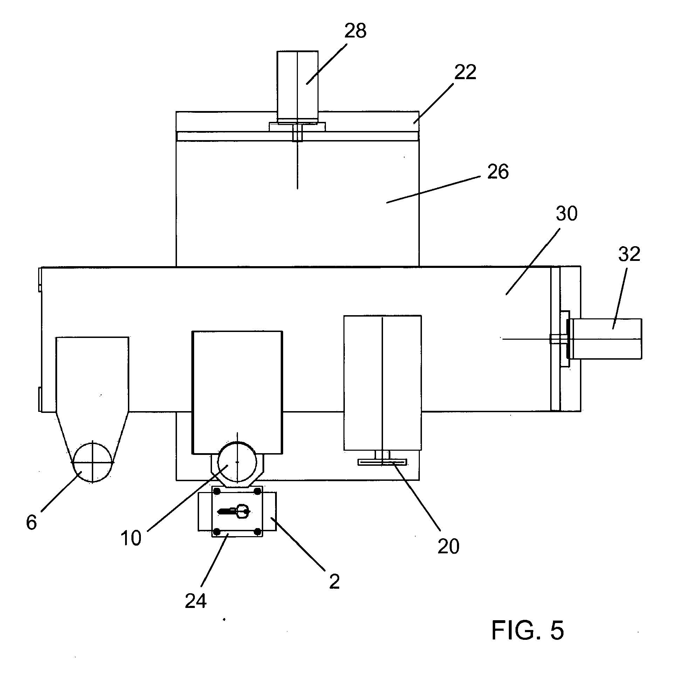

To implement the aforedescribed method the invention uses an automatic machine, schematically illustrated in Figure 5.

This machine comprises a base 22 and a work table 24, which is rigid with the base 22 and to which the sheet metal piece 2 can be fixed in a properly defined position.

On the base 22 a first carriage is mounted movable relative to the base in the direction of approach to the work table 24 and withdrawal therefrom. An electric motor 28, preferably of stepping type, controlled by a control unit (not shown in the drawings) drives the carriage 26 along the base 22 in the two directions.

On the first carriage 26 a second carriage 30 is mounted movable relative to the first carriage 26 in a direction parallel to the work table and perpendicular to that in which the first carriage moves. The second carriage is driven by a stepping motor 32 controlled by the same control unit.

The milling head 6, the laser cutting head 10 and the brushing head 20 are mounted on the second carriage 30; of these, at least the milling head and the brushing head are provided with means, controlled by the same control unit, for moving them in a direction perpendicular to the work table.

The coordinated action of these three heads, under the control of the control unit for the entire operating cycle, enables those interventions characteristic of the invention to be carried out on the sheet metal piece 2 locked on the work table 24, with resultant production of the key blank having the desired profile.

## Claims

1. A method for producing key blanks for cylinder locks, comprising the steps of:
- forming with a slot miller (8), in at least one surface of a sheet metal piece (2) of substantially constant thickness provided with locators (4) for its precise positioning on a work table (24), those grooves (16) which define the profile of the key blank (14),
- laser cutting the shape of the key blank to be obtained, but with the exclusion at least of its tip, such that the grooves (16) formed in this manner occupy the shank (12) of said key blank (14),
- subjecting said shape to brushing in order to remove the burrs caused by the laser cut,
- separating the key blank (14) obtained in this manner from said sheet metal piece (2) by cutting with said slot miller through all those points at which said key blank (14) is joined to the remaining part of the sheet metal piece (2).

2. A method as claimed in claim 1, **characterised by** stabilizing the position of the sheet metal piece on the work table (24) by engaging locators present in said sheet metal piece with reference elements present in said work table.

3. A method as claimed in claim 2, **characterised by** stabilizing the position of the sheet metal piece (2) on the work table by engaging holes (4) provided in said sheet metal piece with reference elements present in said work table.

4. A method as claimed in one or more of the preceding claims, **characterised by** laser cutting the shape of the key blank to be obtained, with the exclusion only of its tip.

5. A machine for implementing the method in accordance with one or more of the preceding claims, comprising, on a base (22):
- a work table (24) on which a sheet metal piece (2) of substantially constant thickness is placed in a well defined position, and from which at least one key blank (14) is to be obtained,
- a first carriage (26) movable relative to said base (22) in a first direction of approach to said work table (24) and of withdrawal therefrom,
- means (28) for controlledly moving said first carriage (26) relative to said base (22),
- a second carriage (30) movable relative to said first carriage (26) in a second direction parallel to said work table (24) and perpendicular to said first direction,
- means (32) for controlledly moving said second carriage (30) relative to said first carriage (26),
- a milling head (6) mounted on said second carriage (30) and provided both with rotating means for the brush and with means for its movement parallel to said tool, which consists of a slot miller,
- a laser cutting head (10), mounted on said second carriage (30),
- a brushing head (20) mounted on said second carriage (30) and provided both with rotating means for the brush and with means for its movement in the direction of approach to said work table (24) and of withdrawal therefrom,
- a unit for controlling said movement means for said first carriage, for said second carriage, for said milling head and for said brushing head, in accordance with the method according to one or more of the preceding claims.

## Patentansprüche

1. Verfahren zur Herstellung von Schlüsselrohlingen für Zylinderschlösser, das die folgenden Schritte umfasst:
- Ausbilden der Nuten (16), die das Profil des Schlüsselrohlings (14) definieren, mit einem Nutenfräser (8) in mindestens einer Oberfläche eines Metallblechstücks (2) mit einer im Wesentlichen konstanten Dicke, das mit Positionierhilfen (4) für seine präzise Positionierung auf einem Arbeitstisch (24) versehen ist,
- Laserschneiden der Form des zu erhaltenden Schlüsselrohlings, doch unter Ausschluss zumindest seiner Spitze, so dass die derart ausgebildeten Nuten (16) den Schaft (12) des Schlüsselrohlings (14) belegen,
- Unterziehen dieser Form einem Bürsten, um die durch das Laserschneiden verursachten Grate zu entfernen,
- Trennen des derart erhaltenen Schlüsselrohlings (14) vom Metallblechstück (2) durch Schneiden mit dem Nutenfräser durch alle die Stellen, an denen der Schlüsselrohling (14) mit dem übrigen Teil des Metallblechstücks (2) verbunden ist.

2. Verfahren nach Anspruch 1, das durch Stabilisieren der Position des Metallblechstücks auf dem Arbeitstisch (24) durch Ineingriffbringen von im Metallblechstück vorhandenen Positionierhilfen mit auf dem Arbeitstisch befindlichen Bezugselementen gekennzeichnet ist.

3. Verfahren nach Anspruch 2, das durch Stabilisieren der Position des Metallblechstücks (2) auf dem Arbeitstisch durch Ineingriffbringen von im Metallblechstück vorgesehenen Löchern (4) mit auf dem Arbeitstisch befindlichen Bezugselementen gekennzeichnet ist.

4. Verfahren nach einem oder mehreren der vorhergehenden Ansprüche, das durch Laserschneiden der Form des zu erhaltenden Schlüsselrohlings unter Ausschluss nur seiner Spitze gekennzeichnet ist.

5. Maschine zur Durchführung des Verfahrens nach einem oder mehreren der vorhergehenden Ansprüche, die auf einem Unterbau (22) Folgendes umfasst:
- einen Arbeitstisch (24), auf dem ein Metallblechstück (2) mit einer im Wesentlichen konstanten Dicke in einer genau definierten Position angeordnet wird, und aus dem mindestens ein Schlüsselrohling (14) erhalten werden soll,
- einen ersten Schlitten (26), der relativ zum Unterbau (22) in einer ersten Richtung der Annäherung an den Arbeitstisch (24) und des Rückzugs von ihm beweglich ist,
- Mittel (28) zum kontrollierten Bewegen dieses ersten Schlittens (26) relativ zum Unterbau (22),
- einen zweiten Schlitten (30), der relativ zum ersten Schlitten (26) in einer zweiten Richtung beweglich ist, die parallel zum Arbeitstisch (24) und perpendikulär zur ersten Richtung ist,
- Mittel (32) zum kontrollierten Bewegen dieses zweiten Schlittens (30) relativ zum ersten Schlitten (26),
- einen Fräskopf (6), der auf den zweiten Schlitten (30) montiert und sowohl mit Drehmitteln für die Bürste als auch mit Mitteln für ihre Bewegung parallel zum Werkzeug versehen ist, das aus einem Nutenfräser besteht,
- einen Laserschneidkopf (10), der auf den zweiten Schlitten (30) montiert ist,
- einen Bürstkopf (20), der auf den zweiten Schlitten (30) montiert und sowohl mit Drehmitteln für die Bürste als auch mit Mitteln für ihre Bewegung in der Richtung der Annäherung an den Arbeitstisch (24) und des Rückzugs von ihm versehen ist,
- eine Einheit zum Steuern der Bewegungsmittel für den ersten Schlitten, für den zweiten Schlitten, für den Fräskopf und für den Bürstkopf gemäß dem Verfahren nach einem oder mehreren der vorhergehenden Ansprüche.

## Revendications

1. Procédé de fabrication d'ébauches de clefs, destinées à des serrures à cylindre, comprenant les étapes de :
- façonnage par une fraiseuse à rainures (8), dans au moins une surface d'une pièce de tôlerie (2) d'épaisseur sensiblement constante munie de dispositifs de positionnement (4) destinés à son positionnement précis sur une table porte-pièce (24), des rainures (16) définissant le profil de l'ébauche de clef (14),
- découpe au laser de la forme de l'ébauche de clef à obtenir, mais à l'exclusion au moins de son extrémité, de sorte que les rainures (16) formées de cette manière occupent la tige (12) de ladite ébauche de clef (14),
- soumission de ladite forme à un brossage en vue d'éliminer les bavures provoquées par la découpe au laser,
- séparation de l'ébauche de clef (14) obtenue de cette manière de ladite pièce de tôlerie (2) par découpe au moyen de ladite fraiseuse à rainures de tous les points par lesquels ladite ébauche de clef (14) est reliée à la partie résiduelle de la pièce de tôlerie (2).

2. Procédé selon la revendication 1, **caractérisé par** la stabilisation de la position de la pièce de tôlerie sur la table porte-pièce (24) par solidarisation de dispositifs de positionnement présents dans ladite pièce de tôlerie avec des éléments de référence présents sur ladite table porte-pièce.

3. Procédé selon la revendication 2, **caractérisé par** la stabilisation de la position de la pièce de tôlerie (2) sur la table porte-pièce par solidarisation de trous (4) situés dans ladite pièce de tôlerie avec des éléments de référence présents sur ladite table porte-pièce.

4. Procédé selon l'une ou plusieurs des revendications précédentes, **caractérisé par** une découpe au laser de la forme de l'ébauche de clef à obtenir, en excluant uniquement son extrémité.

5. Machine de mise en oeuvre du procédé selon l'une ou plusieurs des revendications précédentes, comprenant sur une base (22) :
- une table porte-pièce (24) sur laquelle une pièce de tôlerie (2) d'épaisseur sensiblement constante est placée dans une position bien définie, et à partir de laquelle on doit obtenir au moins une ébauche de clef (14),
- un premier chariot (26) mobile par rapport à ladite base (22) dans une première direction d'approche vers ladite table porte-pièce (24) et de retrait de celle-ci,
- des moyens (28) pour déplacer de manière contrôlée ledit premier chariot (26) par rapport à ladite base (22),
- un second chariot (30) mobile par rapport audit premier chariot (26) dans une seconde direction parallèle à ladite table porte-pièce (24) et perpendiculaire à ladite première direction,
- des moyens (32) pour déplacer de manière contrôlée ledit second chariot (30) par rapport audit premier chariot (26),
- une tête de fraisage (6) montée sur ledit second chariot (30) et munie à la fois de moyens de mise en rotation de la brosse et de moyens destinés à son déplacement parallèlement audit outil, consistant en une fraiseuse à rainures,
- une tête de découpe au laser (10), montée sur ledit second chariot (30),
- une tête de brossage (20) montée sur ledit second chariot (30) et munie à la fois de moyens de mise en rotation de la brosse et de moyens pour son déplacement dans la direction d'approche vers ladite table porte-pièce (24) et de retrait de celle-ci,
- une unité de commande desdits moyens de déplacement dudit premier chariot, dudit second chariot, de ladite tête de fraisage et de ladite tête de brossage, selon le procédé selon l'une ou plusieurs des revendications précédentes.
